# FASCICULE DE BREVET EUROPEEN

(11) **EP 4 185 398 B1**
(45) Date de publication et mention de la délivrance du brevet: **15.05.2024**
(21) Numéro de dépôt: 21749140.6
(22) Date de dépôt: 22.07.2021
(51) Int. Cl.: B01D 53/62, B01D 53/00, F25J 1/00, F25J 3/06, A62C 5/00, C01B 32/55

(54) **SYSTÈME DE CAPTATION DE DIOXYDE DE CARBONE PAR ATOMISATION D'AZOTE LIQUIDE**
SYSTEM ZUR ERFASSUNG VON KOHLENDIOXID DURCH ZERSTÄUBUNG MIT FLÜSSIGEM STICKSTOFF
SYSTEM FOR CAPTURING CARBON DIOXIDE BY LIQUID NITROGEN ATOMIZATION

(30) Priorité: 22.07.2020 FR 2007680
(43) Date de publication de la demande: 31.05.2023
(73) Titulaire: Revcoo, 69530 Brignais (FR)
(72) Inventeur: TATON, Paul, 69210 CHEVINAY (FR); LUCAS, Hugo, 69004 LYON (FR)
(74) Mandataire: Plasseraud IP
(86) Numéro de dépôt international: PCT/EP2021/070521
(87) Numéro de publication internationale: WO 2022/018201

(56) Documents cités:
- EP-A1- 2 586 516
- DE-C1- 19 716 844
- FR-A1- 2 253 193
- US-A1- 2018 236 397
- US-A1- 2018 236 460

## Description

La présente invention s'inscrit dans le domaine de la capture et du stockage du CO2. L'objectif de l'invention est de transformer le CO2 en glace puis de le séparer pour pouvoir le stocker et le valoriser.

US 2018/236460 A1 divulgue un procédé mettant en oeuvre un hydrocyclone à barbotage d'air pour la séparation de gaz par cryogénie.

US 2018/0236397 A1 divulgue un hydrocyclone pour la séparation de gaz dans un porteur de gaz.

FR 2 253 193 A1 divulgue un perfectionnement à la réfrigération de produits par la neige carbonique et à la production de neige carbonique.

### Description de l'invention

La présente invention est relative à un système de captation du CO2 contenu dans un mélange gazeux par séparation par le gel sous l'effet d'un courant d'azote liquide. Elle peut être intégrée en aval de tout procédé émetteur de CO2. En fonction des compositions des mélanges à traiter variant d'une source d'émission à une autre, un système de pré-traitement est adapté afin d'acheminer le mélange gazeux contenant le CO2 dans des conditions optimales de fonctionnement. La présente invention peut aussi être équipée d'un système de récupération de froid pour limiter les consommations énergétiques et les coûts opérationnels.

Un gaz contenant du CO2 est refroidi à des températures cryogéniques afin d'obtenir du CO2 solide qui sera ensuite séparé du mélange. La mise en contact du gaz pressurisé avec l'azote liquide dans une technologie de type impact de jet est appelé dans ce qui suit « contacteur » et permet d'obtenir un refroidissement contrôlé du mélange composé de gouttelettes d'azote liquide, de CO2 solide et de gaz. Le contacteur est intégré dans une manchette en amont d'un cyclone séparateur. A l'entrée du cyclone, l'azote liquide s'est quasiment évaporé en totalité dans la manchette et le mélange est principalement constitué de gaz et de flocons de CO2 solides. Le CO2 solide, sous forme de flocons de petite taille, est véhiculé par le gaz restant et entrainé dans le cyclone pour être séparé et recueilli.

Le système est approvisionné en froid par l'apport d'azote liquide, inerte et non nocif pour l'environnement, ainsi que par la détente du mélange gazeux à travers le contacteur. Les températures mises en jeu lors du refroidissement sont cryogéniques avec des valeurs pouvant atteindre les -196°C. Au sein du système, les pressions quant à elles atteignent au maximum 10 bars relatifs pour les gaz en entrée du procédé.

La présente invention est décomposable en deux principaux sous-ensembles ayant chacun un rôle clé dans le bon déroulement du procédé. Ces sous-ensembles sont adaptés en fonction de la composition du mélange à traiter et des caractéristiques de la source de l'effluent. Ils sont identifiés comme suit :
a. La production de CO2 sous forme solide que nous appellerons « système de pulvérisation ».
b. La séparation de ce CO2 solide à travers le cyclone que nous appellerons « système de séparation ».

Le système de pulvérisation est composé d'une buse à mélange externe mettant en contact un jet de réfrigérant cryogénique liquide avec le gaz à traiter. De cette manière, le réfrigérant cryogénique passant de l'état liquide à l'état gazeux réduit la température du mélange gazeux chargé de CO2 sous la température de cristallisation du CO2 qui passe sous forme de flocons solides. Le système de pulvérisation est placé en amont du système de séparation.

Le système de séparation est constitué d'un cyclone permettant d'achever une séparation gaz-solide par gravité.

### Description des schémas

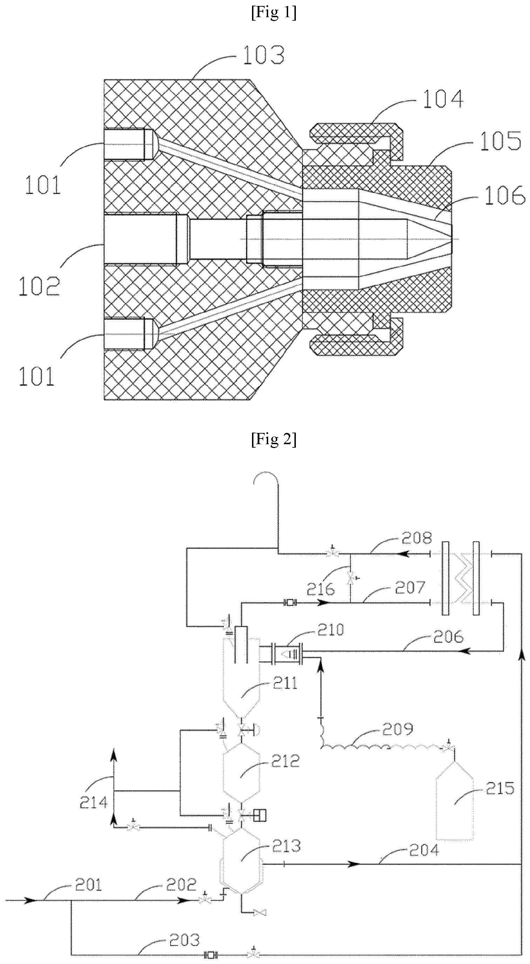

[Fig 1] représente le contacteur à mélange externe permettant de transformer le CO2 en glace. Le contacteur est équipé de 2 entrées pour le gaz à traiter (101) et d'une entrée pour l'azote liquide (102). La buse est composée de 4 pièces qui sont le corps de buse (103), l'injecteur d'azote liquide (106), la tête de buse (105) et un écrou de fixation (104) pour maintenir l'ensemble. Le corps de buse (103) fait converger les gaz et l'azote liquide vers la tête de buse. L'injecteur d'azote liquide (106) définit la vitesse et le débit d'azote liquide par sa forme et le diamètre de son orifice. La tête de buse (105) permet de répartir uniformément le gaz dans une chambre creuse et lui impose un angle de jet pour venir impacter l'azote liquide.
[Fig 2] représente le système de pulvérisation et le système de séparation assemblés pour une configuration de captation de CO2. Un effluent chargé en CO2 (201) est divisé en deux flux. Le premier flux (202) entre dans un réservoir de sublimation (213) pour fournir de la chaleur au CO2 glace et le faire passer à l'état de gaz. Le flux chargé en CO2 ainsi refroidi (204) rejoint le deuxième flux chargé en CO2 (203) avant de pénétrer dans un échangeur pour récupérer le froid fournir par le flux d'azote liquide (209) stocké dans un réservoir auto-pressurisé (215). Le flux chargé en CO2 ainsi refroidi (206) pénètre dans le système de pulvérisation (210) pour être mis en contact avec le flux d'azote liquide (209) et transformer le CO2 en glace. Le CO2 solide ainsi formé est ensuite séparé des autres composés gazeux du mélange dans un cyclone (211) avant d'être récupéré dans un double SAS tampon (212) permettant au procédé de fonctionner en continu en empêchant le CO2 gazeux contenu dans le réservoir de sublimation (213) de pénétrer dans le cyclone (211). Le gaz ainsi traité est divisé en deux flux. Le premier flux (207) entre dans l'échangeur pour récupérer la chaleur du flux chargé en CO2 (204 + 203). Le second flux (216) est directement redirigé en sortie du système pour pouvoir réguler la température du flux en sortie de l'échangeur (206). Le CO2 gazeux et pur ainsi formé par le système est acheminé vers une zone de stockage ou valorisation (214).

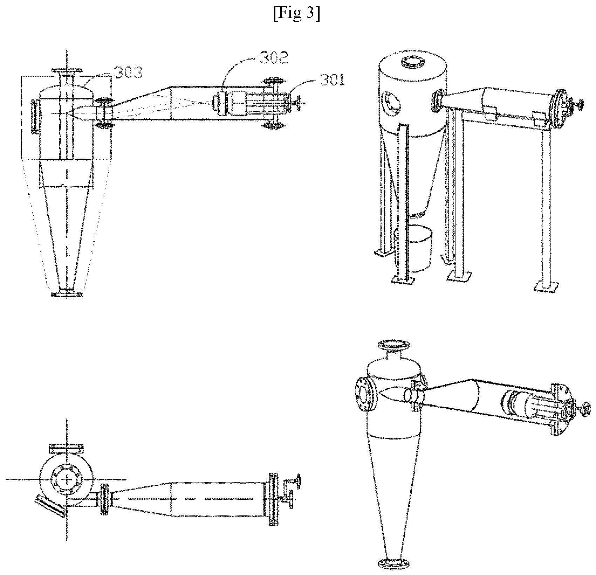

[Fig 3] représente le système de pulvérisation intégré dans le système de séparation. Une bride (301) permet de fixer et d'alimenter le contacteur (302) situé dans la manchette. La manchette est fixée à l'entrée du cyclone séparateur (303).

## Revendications

1. Procédé de traitement du CO2 gazeux présent dans un mélange, dans lequel le mélange gazeux est refroidi à des températures cryogéniques par un jet d'azote liquide pulvérisé pour transformer le CO2 en glace qui sera ensuite séparé du reste du mélange à travers un cyclone (211).

2. Procédé selon la revendication 1 **caractérisé en ce que** l'on récupère le CO2 solide dans un réservoir de sublimation (213) dans lequel le CO2 repasse à l'état de gaz en récupérant la chaleur du mélange gazeux à traiter après avoir séjourné dans un réservoir tampon à double sas (212) permettant ainsi de garantir un fonctionnement du système en continu.

## Patentansprüche

1. Verfahren zur Behandlung von gasförmigem CO₂ in einem Gemisch, wobei das Gasgemisch durch einen Strahl aus pulverisiertem Flüssigstickstoff auf kryogene Temperaturen abgekühlt wird, um das CO₂ in Eis umzuwandeln, das dann durch einen Zyklon (211) vom Rest des Gemischs getrennt wird.

2. Verfahren nach Anspruch 1, **dadurch gekennzeichnet, dass** das feste CO₂ in einem Sublimationstank (213) gewonnen wird, in dem das CO₂ wieder in den gasförmigen Zustand übergeht, wobei es die Wärme des zu behandelnden Gasgemisches zurückgewinnt, nachdem es sich in einem Puffertank mit zwei Schleusen (212) aufgehalten hat, wodurch ein kontinuierlicher Betrieb des Systems gewährleistet wird.

## Claims

1. A method for treating gaseous CO2 present in a mixture, wherein the gas mixture is cooled to cryogenic temperatures by a jet of sprayed liquid nitrogen in order to transform the CO2 into ice which will then be separated from the rest of the mixture through a cyclone (211).

2. The method according to claim 1, **characterised in that** the solid CO2 is recovered in a sublimation tank (213) wherein the CO2 returns to the gas state by recovering the heat from the gas mixture to be treated after having remained in a double airlock buffer tank (212) thus allowing ensuring a continuous operation of the system.
